# EUROPEAN PATENT APPLICATION

(11) **EP 1 585 306 A1**
(43) Date of publication of application: **12.10.2005**
(21) Application number: 05251744.8
(22) Date of filing: 22.03.2005
(51) Int. Cl.: H04N 1/00

(54) **Digital still camera and method of controlling same**

(30) Priority: 29.03.2004 JP 2004093965
(71) Applicant: FUJI PHOTO FILM CO., LTD., Kanagawa 250-0123 (JP)
(72) Inventor: Tanaka, Hiroshi, Asaka-shi Saitama 351-8585 (JP)
(74) Representative: Stevens, Jason Paul

(57) **Abstract**

Access point information such as ESS-ID, WEP-KEY for the purpose of performing a transmission using a wireless LAN has been recorded on a two-dimensional bar code. The image of the two-dimensional bar code is sensed using a digital still camera and the image of the two-dimensional bar code is obtained. The access point information is read from the obtained image of the two-dimensional bar code. Image data is transmitted by a wireless LAN using the access point information read. When the image of the two-dimensional bar code is sensed, the camera is set to a macro image sensing mode automatically. Since the two-dimensional bar code can thus be subjected to close-up imaging and a comparatively large image can be obtained, the access point information can be read comparatively accurately.

## Description

### BACKGROUND OF THE INVENTION

### Field of the Invention

This invention relates to a digital still camera and to a method of controlling the same.

### Description of the Related Art

Because of their ability to record a variety of information, bar codes have diverse uses. By reading a bar code using a bar-code reader, the content indicated by the bar code is recognized. A bar code may not only be read by a bar-code reader but can also have its image sensed to thereby read the content thereof (see the specification of Japanese Patent Application Laid-Open No. 9-114913).

Since a bar code is comparatively small in size, it is necessary to obtain a large image by close-up imaging.

Further, there is also an arrangement in which by taking a picture of a print control command using a digital still camera, the command is captured and input to the digital still camera (see the specification of Japanese Patent Application Laid-Open No. 2003-131838).

### DISCLOSURE OF THE INVENTION

An object of the present invention is to obtain a comparatively large bar-code image.

According to a first aspect of the present invention, the foregoing object is attained by providing a digital still camera having an image sensing device for sensing the image of a subject and outputting image data representing the image of the subject, and a recording controller for recording image data, which has been output from the image sensing device, on a recording medium, the digital still camera comprising: a bar-code-image.sensing mode setting device for setting a mode for sensing the image of a bar code in which has been recorded setting information to be used in a transmission utilizing a wireless LAN; an image sensing controller for controlling the image sensing device, in response to setting of the bar-code-image sensing mode by the bar-code-image sensing mode setting device, so as to sense the image of the bar code by a macro image sensing mode and output bar-code image data representing the image of the bar code; a wireless-LAN setting information detecting device for detecting the wireless-LAN setting information from the bar-code image data, which has been output from the image sensing device, based upon control by the image sensing controller; and a wireless-LAN transmitting device for wirelessly transmitting image data, which has been recorded on the recording medium, using the wireless-LAN setting information that has been detected by the wireless-LAN setting information detecting device.

The first aspect of the present invention provides also a control method suited to the digital still camera described above. Specifically, the present invention provides a method of controlling a digital still camera having an image sensing device for sensing the image of a subject and outputting image data representing the image of the subject, and a recording controller for recording image data, which has been output from the image sensing device, on a recording medium, the method comprising the steps of: controlling the image sensing device, in response to setting of a mode for sensing the image of a bar code in which has been recorded setting information to be used in a transmission utilizing a wireless LAN, so as to sense the image of the bar code by a macro image sensing mode and output bar-code image data representing the image of the bar code; detecting the wireless-LAN setting information from the bar-code image data, which has been output from the image sensing device; and wirelessly transmitting image data, which has been recorded on the recording medium, by a wireless LAN using the detected wireless-LAN setting information.

In accordance with the first aspect of the present invention, the image of a bar code in which has been recorded setting information to be used in a transmission utilizing a wireless LAN is sensed by a macro image sensing mode when a bar-code-image sensing mode is set. Wireless-LAN setting information is detected from bar-code image data obtained by sensing the image of the bar code. Image data that has been recorded on a recording medium is transmitted wirelessly using the detected wireless-LAN setting information.

Since the sensing of the bar-code image is performed in the macro image sensing mode (the focal length of the image sensing device is set to be short by the macro image sensing mode), close-up imaging can be carried out and a large bar-code image obtained. The wireless-LAN setting information that has been recorded in the bar code can be read comparatively accurately.

The digital still camera may further comprise a preview mode setting device for setting a preview mode; a camera internal memory for temporarily storing image data, which has been output from the image sensing device, in accordance with the preview mode that has been set by the preview mode setting device; and a recording command device for inputting a recording command. In such case the recording controller would record image data, which has been stored temporarily in the camera internal memory, on the recording medium in response to input of a recording command from the recording command device, and the wireless-LAN setting information detecting device would detect the wireless-LAN setting information from the bar-code image data that has been stored temporarily in the camera internal memory.

Preferably, the digital still camera further comprises a controller for controlling the image sensing controller and the wireless-LAN information detecting device so as to repeat the sensing of bar-code and the detection of the wireless-LAN setting information in response to failure of detection of the wireless-LAN information by the wireless-LAN information detecting device.

According to a second aspect of the present invention, the foregoing object is attained by providing a digital still camera having an image sensing device for sensing the image of a subject and outputting image data representing the image of the subject, and a recording controller for recording image data, which has been output from the image sensing device, on a recording medium, the digital still camera comprising: a bar-code-image sensing mode setting device for setting a mode for sensing the image of a bar code in which has been recorded image-data transmission destination information; an image sensing controller for controlling the image sensing device, in response to setting of the bar-code-image sensing mode by the bar-code-image sensing mode setting device so as to sense the image of the bar code by a macro image sensing mode and output bar-code image data representing the image of the bar code; a transmission-destination information detecting device for detecting the transmission-destination information from the bar-code image data, which has been output from the image sensing device, based upon control by the image sensing controller; and a wireless LAN device for wirelessly transmitting image data, which has been recorded on the recording medium, to the transmission destination specified by the transmission-destination information detected by the transmission-destination information detecting device.

The second aspect of the present invention provides also a control method suited to the digital still camera described above. Specifically, the present invention provides a method of controlling a digital still camera having an image sensing device for sensing the image of a subject and outputting image data representing the image of the subject, and a recording controller for recording image data, which has been output from the image sensing device, on a recording medium, the method comprising the steps of: controlling the image sensing device, in response to setting of a mode for sensing the image of a bar code in which has been recorded image-data transmission destination information, so as to sense the image of the bar code by a macro image sensing mode and output bar-code image data representing the image of the bar code; detecting the transmission-destination information from the bar-code image data that has been output from the image sensing device; and wirelessly transmitting image data, which has been recorded on the recording medium, to the transmission destination specified by the transmission-destination information detected.

Since the second aspect of the present invention also is such that the sensing of the bar-code image is performed in the macro image sensing mode, a comparatively large bar-code image can be obtained. The transmission-destination information that has been recorded in the bar code can be read comparatively accurately.

The digital still camera according to the second aspect of the present invention also may further comprise a preview mode setting device for setting a preview mode; a camera internal memory for temporarily storing image data, which has been output from the image sensing device, in accordance with the preview mode that has been set by the preview mode setting device; and a recording command device for inputting a recording command. In such case the recording controller would record image data, which has been stored temporarily in the camera internal memory, on the recording medium in response to a recording command that has been input from the recording command device, and the transmission-destination information detecting device would detect the transmission-destination information from the bar-code image data that has been stored temporarily in the camera internal memory.

The digital still camera further comprises a controller for controlling the image sensing controller and the transmission-destination information detecting device so as to repeat the detecting of the bar-code information and transmission-destination information in response to failure of detection of the transmission-destination information by the transmission-destination information detecting device.

Furthermore, in a case where the image sensing device includes a solid-state image sensing element for sensing the image of a subject and outputting an analog video signal representing the image of the subject, a gain-control amplifying circuit for adjusting level of the analog video signal that has been output from the solid-state image sensing element, and an analog/digital converting circuit for converting the analog video signal, which has been output from the gain-control amplifying circuit, to image data, the digital still camera may further comprises: an electronic flash device; and a controller for exercising control so as to turn off a light emission in the electronic flash device and raise gain in the gain-control amplifying circuit in response to setting of the bar-code-image sensing mode by the bar-code-image sensing mode setting device.

According to a third aspect of the present invention, the foregoing object is attained by providing a digital still camera for sensing the image of a subject using an image sensing device and recording image data, which represents the image of the subject, on a recording medium, comprising: a setting device for setting a wireless-LAN transmission mode; a wireless LAN device for wirelessly transmitting image data, which has been recorded on the recording medium, based upon set wireless-LAN information in response to setting of the wireless-LAN transmission mode by the wireless-LAN transmission mode setting device; a bar-code-image sensing mode setting device for setting a mode for sensing the image of a bar code, in which wireless-LAN setting information has been recorded, in accordance with setting of the wireless-LAN transmission mode by the wireless-LAN transmission mode setting device; an image sensing controller for controlling the image sensing device in response to setting of the bar-code-image sensing mode by the bar-code-image sensing mode setting device so as to sense the image of the bar code and output bar-code image data representing the image of the bar code; a wireless-LAN transmission information detecting device for detecting the wireless-LAN transmission information from the bar-code image data, which has been output from the image sensing device, based upon control by the image sensing controller; and a wireless-LAN device setting device for setting the wireless-LAN transmission information, which has been detected by the wireless-LAN transmission information detecting device, in the wireless-LAN device.

The third aspect of the present invention provides also a control method suited to the digital still camera described above. Specifically, the present invention provides a method of controlling a digital still camera for sensing the image of a subject using an image sensing device and recording image data, which represents the image of the subject, on a recording medium, the method comprising the steps of: wirelessly transmitting image data, which has been recorded on the recording medium, based upon set wireless-LAN information in accordance with setting of a wireless-LAN transmission mode; setting a mode for sensing the image of a bar code, in which wireless-LAN setting information has been recorded, in accordance with setting of the wireless-LAN transmission mode; controlling the image sensing device, in response to setting of the bar-code-image sensing mode, so as to sense the image of the bar code and output bar-code image data representing the image of the bar code; detecting the wireless-LAN transmission information from the bar-code image data that has been output from the image sensing device; and setting the detected wireless-LAN transmission information in the wireless-LAN device.

In accordance with the third aspect of the present invention, a bar-code-image sensing mode can be set if a wireless LAN transmission mode has been set. If the wireless LAN transmission mode has been set, it becomes possible to sense the image of a bar code in which has been recorded wireless LAN transmission information for utilizing a wireless LAN transmission. As a result, when a transmission using a wireless LAN becomes necessary, it becomes possible to make a transition to a bar-code-image sensing mode required to perform a wireless LAN transmission.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1A is a perspective view of a digital still camera, and Fig. 1B illustrates a mode selection dial;
Fig. 2 is a block diagram illustrating the electrical structure of the digital still camera;
Fig. 3 illustrates a two-dimensional bar code for AP information as well as the AP information;
Fig. 4 illustrates a two-dimensional bar code for transmission-destination information as well as the transmission-destination information;
Fig. 5 illustrates an example of an image displayed on a display screen;
Figs. 6 and 7 are flowcharts illustrating processing in a wireless LAN mode;
Fig. 8 illustrates an example of an image displayed on a display screen;
Figs. 9 and 10 are flowcharts illustrating processing for setting an access-point transmission destination;
Figs. 11 to 13 illustrate examples of images displayed on a display screen;
Fig. 14 is a flowchart illustrating processing for reading a bar code;
Fig. 15 is a flowchart illustrating processing for analyzing a bar code; and
Fig. 16 is a flowchart illustrating processing in a preview mode.

### DESCRIPTION OF THE PREFERRED EMBODIMENTS

A preferred embodiment of the present invention will now be described in detail with reference to the drawings.

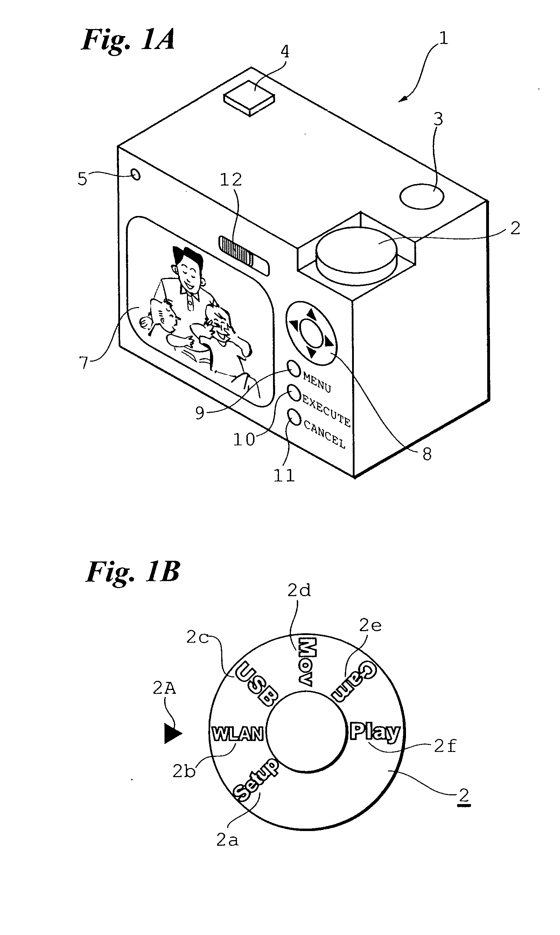

Fig. 1A illustrates the back side of a digital still camera 1, and Fig. 1B is an enlarged plane view of a mode selection dial 2.

As shown in Fig. 1A, provided on the top of the digital still camera 1 is a shutter-release button 3 on the right-hand corner of the camera when viewed from the back. The mode selection dial 2, which is freely rotatable, is provided in front of the shutter-release button 3. A radio antenna 4 is provided on the top of the camera at the left-hand corner when viewed from the back.

A display screen 7 is formed on the back side of the digital still camera 1 substantially at the center thereof. Displayed on the display screen 7 are an image captured by image sensing, an image represented by image data that has been read out of a memory card inserted into the digital still camera 1, and an image for making various settings relative to the digital still camera 1.

A macro mode setting button 5 is provided at the upper left of the display screen 7, and a power switch 12 is provided above the display screen 7. Provided on the right side of the display screen 7 are an up, down, left, right key 8 utilized to select a frame to be displayed on the display screen 7 and to make various settings, a menu button 9, an execute button 10 and a cancel button 11. An image sensing lens (not shown) is provided on the front side of the digital still camera 1, and a USB (Universal Serial Bus) connector is formed in the side face of the camera (the side that is not visible in Fig. 1A).

As shown in Fig. 1B, an indicator 2A is formed on the left side of the mode selection dial 2. Formed on the mode selection dial 2 in a prescribed spaced-apart relation in the circumferential direction thereof are characters 2a reading "Setup", characters 2b reading "WLAN", characters reading 2c reading "USB", characters 2d reading "Mov", characters 2e reading "Cam", and characters 2f reading "Play".

If the setup mode is to be set, the Setup characters 2a are positioned at the indicator 2A. If the wireless LAN mode is to be set, the WLAN characters 2b are positioned at the indicator 2A. If the wireless USB mode is to be set, the USB characters 2c are positioned at the indicator 2A. If the movie mode is to be set, the Mov characters 2c are positioned at the indicator 2A. If the camera mode is to be set, the Cam characters 2e are positioned at the indicator 2A. If the playback mode is to be set, the Play characters 2f are positioned at the indicator 2A.

The set-up mode is selected by the user if an initial setting, etc., is to be made, the wireless LAN mode if communication using a wireless LAN is to be performed, the USB mode if sending and receiving of data is to be performed with a personal computer using a USB cable, the movie mode if a moving picture is to be shot, the camera mode if a still picture is to be taken, and the playback mode if a moving picture or still picture is to be played back.

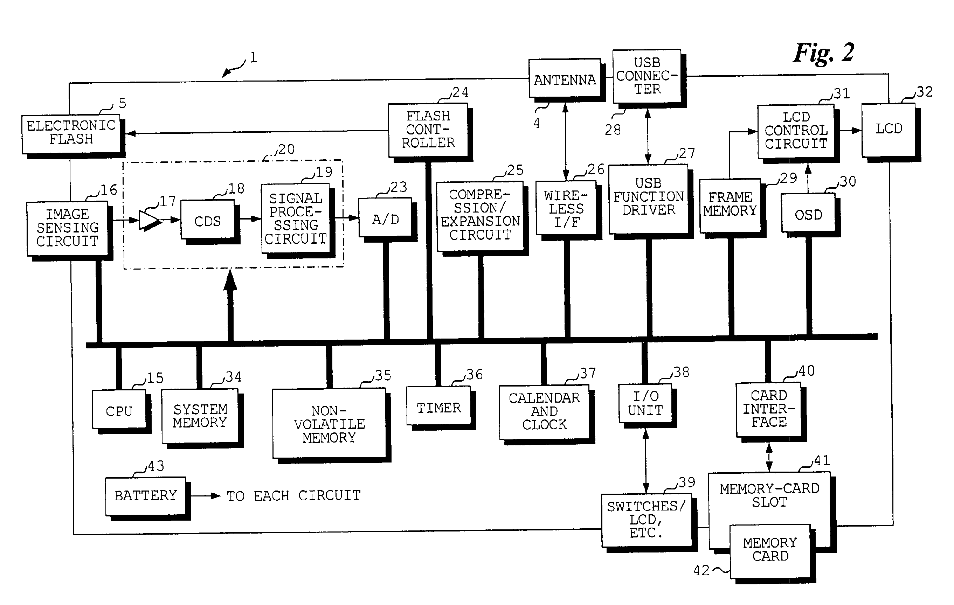

Fig. 2 is a block diagram illustrating the electrical structure of the digital still camera 1.

The overall operation of the digital still camera 1 is controlled by a CPU 15. A battery 43 supplies power to the CPU 15 and various other circuits and devices included in the digital still camera 1.

The digital still camera 1 includes a system memory 34 and a non-volatile memory 35. A program and data, etc., for controlling the operation of the digital still camera 1 have been stored in the system memory 34. Setting information (ESS-ID, WEP-KEY) for communication using a wireless LAN and image-data transmission-destination information (address of the destination, password, etc.) are stored in the non-volatile memory 35, as will be described later.

A timer 36 is used to measure elapsed time when photography is performed using a self-timer. Date and time are measured by a calendar and clock 37. The calendar and clock 37 also have a counter function, described later.

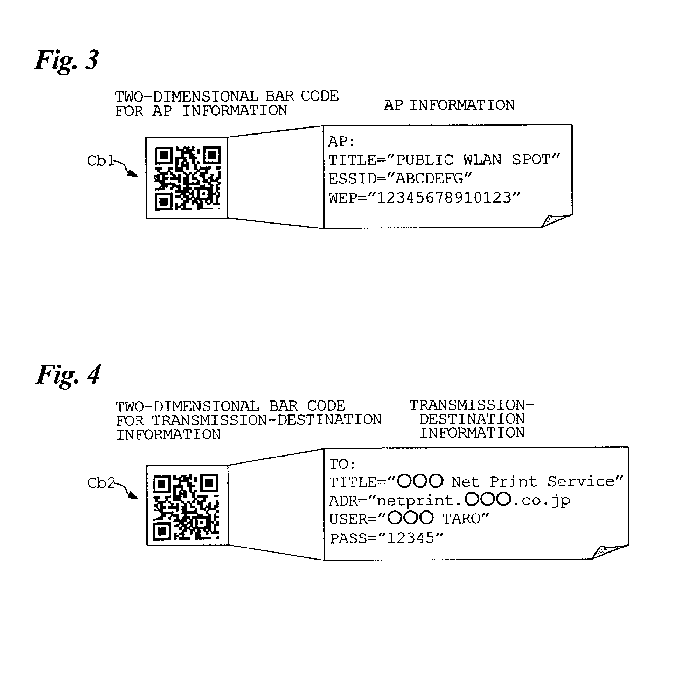

Output signals from the above-described mode selection dial 2, shutter-release button 3, up, down, left, right key 8, menu button 9, execute button 10 and cancel button 11 (these are indicated at reference numeral 39 in Fig. 3) are input to the CPU 15 via an input/output (I/O) unit 38. If the digital still camera 1 has been provided with a light-emitting diode, a light-emission signal is output to the light-emitting element via the input/output unit 38.

An electronic flash device 5 has its light emission controlled by a flash controller 24.

The digital still camera 1 includes an image sensing circuit 16. The image sensing circuit 16 includes a CCD for sensing the image of a subject and outputting an analog video signal representing the image of the subject, and a zoom lens for forming the image of the subject on the photoreceptor surface of the CCD. If the camera mode is selected by the mode selection dial 2, the image of the subject is sensed by the CCD included in the image sensing circuit 16. A video signal representing the image of the subject is output from the image sensing circuit 16 to a signal processing block 20, which proceeds to execute predetermined signal processing. Specifically, the analog video signal that has been output from the image sensing circuit 16 is amplified in a gain control amplifying circuit 17 based upon a gain control signal provided by the CPU 15. (Sensitivity corresponding to ISO sensitivity can be raised by raising the degree of amplification of the gain control amplifying circuit 17.) The analog video signal that has been output from the gain control amplifying circuit 17 is subjected to correlated dual sampling in a correlated dual sampling circuit 18, and the resultant signal is input to a signal processing circuit 19. The latter executes predetermined signal processing such as a white balance adjustment and gamma correction and inputs the resultant signal to an analog/digital converting circuit 23. The latter converts this signal to digital image data.

The digital image data is input to an LCD (Liquid Crystal Display) control circuit 31 via a frame memory 29 and is converted in the LCD control circuit 31 to data suited to an LCD display. An image is displayed on the display screen 7.

Also input to the LCD control circuit 31 is an on-screen signal from an OSD (On-Screen Device) 30. Characters standing for date and time represented by the on-screen signal and an image representing a character can be displayed on a liquid crystal display device 32 (display screen 7) in a form superimposed on the captured image.

If the shutter-release button 3 is pressed when the camera mode has been selected by the mode selection dial 2, the image data obtained as described above is stored temporarily in the frame memory 29. The image data is read out of the frame memory 29 and is compressed by a compression/expansion circuit 25. The compressed image data is recorded on a memory card 42 that has been inserted in an memory-card slot 41 via a card interface 40.

If the playback mode is selected, image data that has been recorded on the memory card 42 is applied to the compression/expansion circuit 25 via the card interface 40. The compression/expansion circuit 25 executes expansion processing and inputs the expanded image data to the LCD control circuit 31 via the frame memory 29. The image represented by the image data that has been recorded on the memory card 42 is displayed on the liquid crystal display device 32 (display screen 7).

The digital still camera 1 is equipped with an antenna 4 for performing a wireless transmission utilizing a wireless LAN, as mentioned above. A wireless interface 26 is connected to the antenna 4. The sending and receiving of image data utilizing a wireless LAN is performed between the digital still camera 1 and an image-data receiving apparatus (not shown) via the antenna 4 using wireless-LAN setting information that has been stored in the non-volatile memory 35.

The digital still camera 1 is provided with a USB connector 28 and a USB function driver 27 for communication with a personal computer or the like using a USB cable.

In the digital still camera according to this embodiment, access point (AP) information (wireless-LAN setting information) that has been recorded in a two-dimensional bar code (a one-dimensional or other bar code may also be used) is read by sensing the image of the bar code in which this information has been recorded. The read access point information is set in the digital still camera 1 by being stored in the non-volatile memory 35. Similarly, by sensing the image of a two-dimensional bar code in which transmission-destination information has been recorded, this information is read from the two-dimensional bar code. The read transmission-destination information is stored in the non-volatile memory 35. In particular, in a case where the image of a two-dimensional bar code is sensed in this embodiment, the camera is set to a macro image sensing mode (the camera zoom lens is placed at a position at which the focal length is shortened so as to adapt the camera to the imaging of a subject that is a short distance away). Accordingly, a comparatively large two-dimensional bar-code image is obtained.

Fig. 3 illustrates an example of a two-dimensional bar code as well as AP information that has been recorded in the two-dimensional bar code.

Included in the AP (Access Point) information are "AP", which is for the purpose of informing that the information is AP information, a title (TITLE), ESSID and WEP-KEY. Such AP information is recorded in the two-dimensional bar code.

Fig. 4 illustrates an example of a two-dimensional bar code as well as transmission-destination information that has been recorded in the two-dimensional bar code.

The transmission-destination information includes "TO", which is for the purpose of informing that the information is transmission-destination information, a title (TITLE), user name (USR) and password (PASS). Such transmission-destination information is recorded in the two-dimensional bar code.

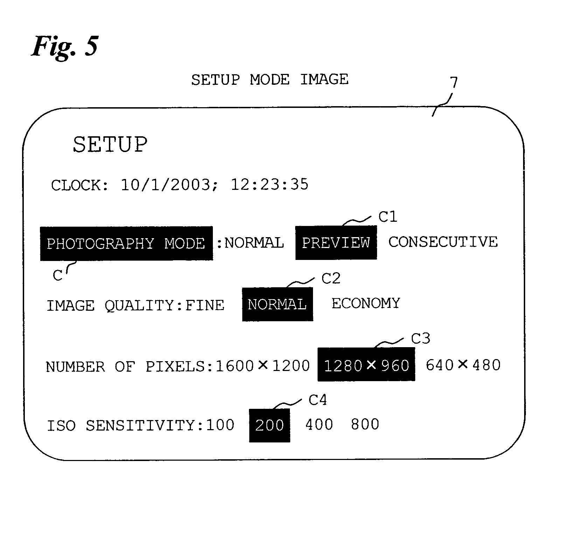

Fig. 5 illustrates an example of a SETUP mode image displayed on the display screen of the digital still camera 1.

Items that can be set in the SETUP mode are a clock, photography mode, image quality, number of pixels and ISO sensitivity. Date and time are displayed opposite the clock item. Characters reading "NORMAL", "PREVIEW" and "CONSECUTIVE" are displayed opposite the photography mode item. Characters reading "FINE", "NORMAL" and "ECONOMY" are displayed opposite the image quality item. Characters reading "1600 x 1200", "1280 x 960" and "640 x 480" are displayed opposite the number of pixels item. Characters reading "100", "200", "400" and "800" are displayed opposite the ISO sensitivity item.

One item among the plurality of items is highlighted by a cursor C. The cursor C is moved to an upper or lower item by pressing the up arrow or down arrow on the up, down, left, right key 8. The item at which the cursor C is situated can be set.

One item of content among content (characters) corresponding to the photography mode is enclosed by a cursor C1. The camera is set to the content enclosed by the cursor C1. Similarly, one item of content among content (characters) corresponding to image quality is enclosed by a cursor C2, one item of content among content (characters) corresponding to number of pixels is enclosed by a cursor C3, and one item of content among content (characters) corresponding to ISO sensitivity is enclosed by a cursor C4. The digital still camera 1 is set to the content enclosed by these cursors.

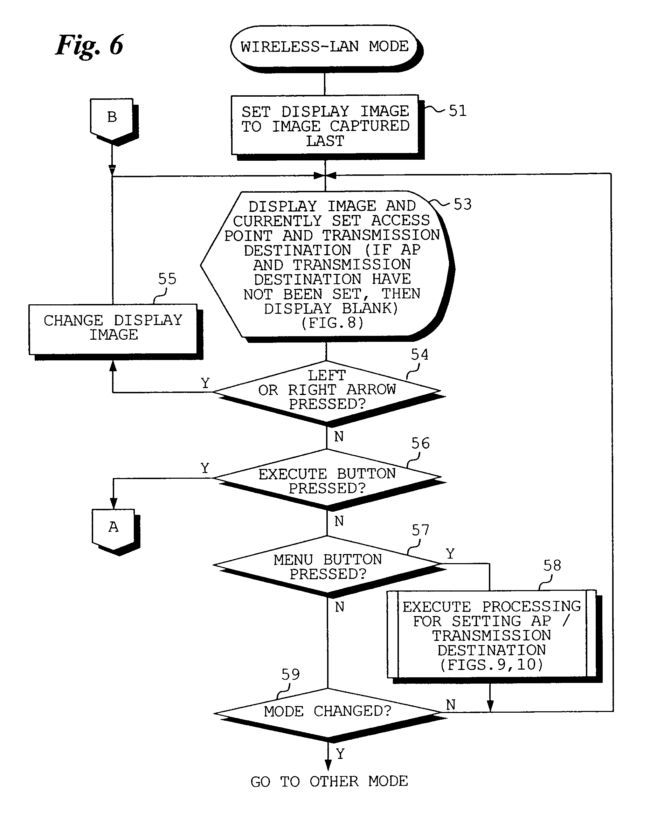

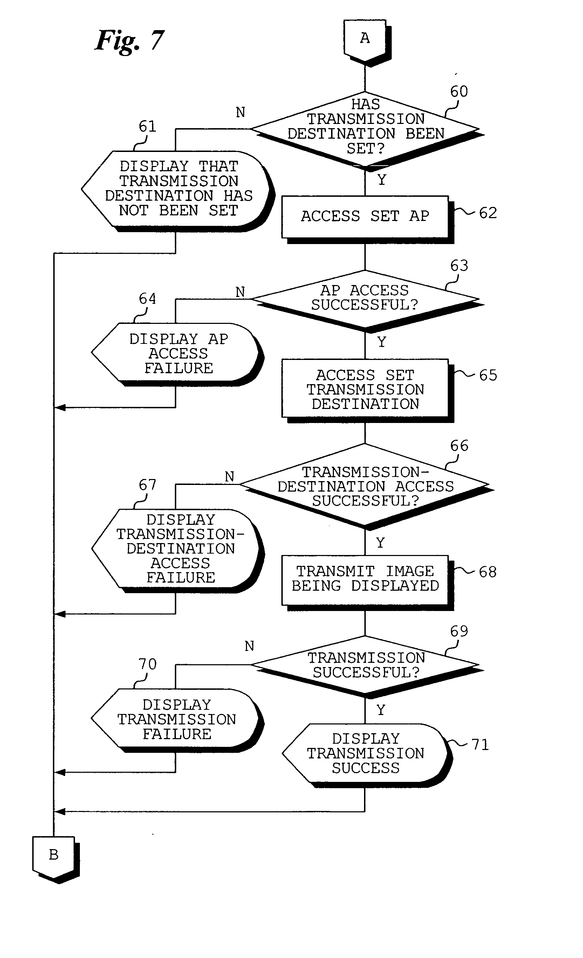

Figs. 6 and 7 are flowcharts illustrating processing in a case where the wireless-LAN mode has been selected by the mode selection dial 2.

If the wireless-LAN mode has been set, the last image that was taken is set as the image to be displayed from among the images represented by the image data that has been recorded on the memory card 42 (step 51).

Next, together with the image that has been set, the AP information and transmission-destination information to which the digital still camera 1 has been set is displayed on the display screen 7 of the digital still camera 1 (step 53). If the AP information and transmission-destination information has not been set (i.e., if the AP information indicating the access point and the transmission-destination information indicating the transmission destination utilized in transmission has not been stored in the non-volatile memory 35), then the sections in which the AP information and transmission-destination information is to be displayed will be blank.

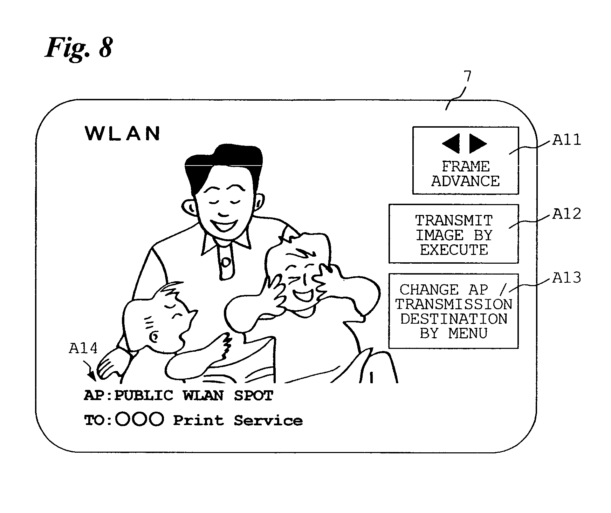

Fig. 8 illustrates an example of an image in which an access point or the like is displayed.

The image that has been set is being displayed over the entirety of the display screen 7. Set at the upper right of the image are an area A11 that notifies the user of frame feed of the image displayed on the display screen 7, an area A12 that notifies the user of the fact that image data representing the image being displayed on the display screen 7 will be transmitted wirelessly, and an area A13 that notifies the user of the fact that it is possible to change (or set anew) at least one of the settings relating to AP information and transmission-destination information by pressing the menu button 9. Access point (AP, which indicates a public WLAN spot) and transmission destination (TO: OOO Print Service) are displayed in an area A14 underneath the image being displayed on the display screen 7.

With reference again to Fig. 6, if the left arrow or right arrow on the up, down, left, right button 8 is pressed ("YES" at step 54), then the image displayed on the display screen 7 changes (step 55). The image of the frame that precedes the image currently being displayed is displayed if the left arrow is pressed, and the image of the frame that follows the image currently being displayed is displayed if the right arrow is pressed.

If the execute button 10 is pressed ("YES" at step 56), then a transition is made to processing for transmitting the image data that represents the image being displayed on the display screen 7. This transmit processing will be described later.

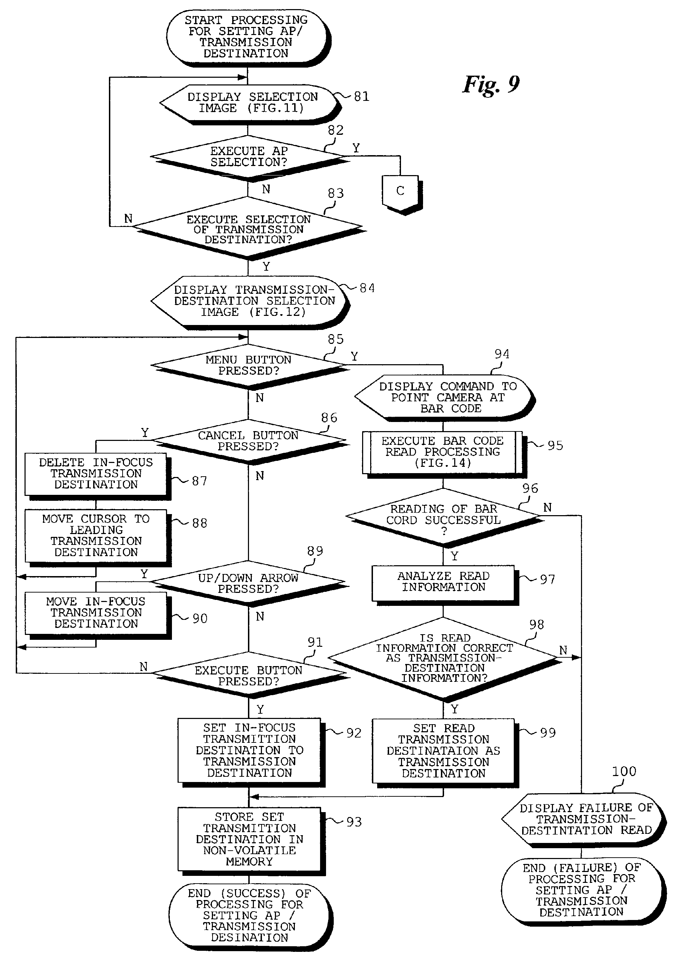

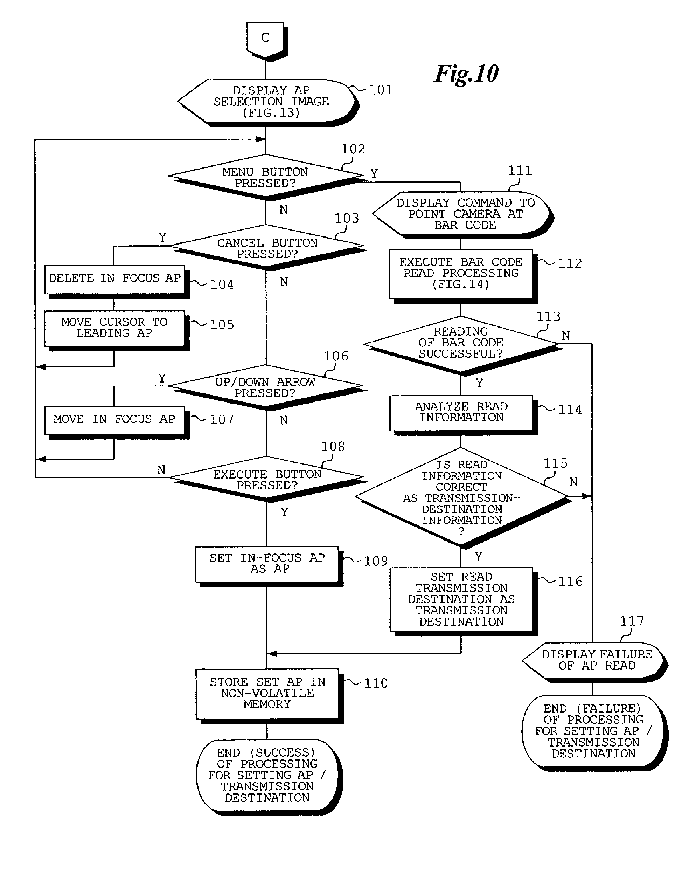

If the menu button 9 is pressed ("YES" at step 57) without pressing the execute button 10 ("NO" at step 56), then a transition is made to processing, which is illustrated in Figs. 9 and 10, for setting AP information and transmission-destination information (step 58). This processing for setting AP information and transmission-destination information will also be described later.

Thus, processing for setting AP information and transmission-destination information is executed on the condition that the wireless-LAN mode has been set. The processing for setting AP information and transmission-destination information is executed in response to setting of the wireless-LAN mode. If the menu button 9 is not pressed ("NO" at step 57) and, moreover, the mode is not changed by the mode selection dial 2 ("NO" at step 59), then the processing from step 53 onward is repeated. If the mode is changed ("YES" at step 59), then the mode to which the change has been made becomes the active mode.

If the execute button 10 is pressed ("YES" at step 56), then whether the transmission destination has been set is checked ("YES" at step 60). If a transmission destination has not been set ("NO" at step 60), then the fact that a transmission destination has not been set is displayed on the display screen 7 (step 61).

If the transmission destination has been set ("YES" at step 60), then the access point that has been set is accessed using the AP information (step 62). If accessing of the access point does not succeed ("NO" at step 63), then the fact that accessing of the access point failed is displayed on the display screen 7 (step 64).

If accessing of the access point succeeds ("YES" at step 63), then the connection to the set transmission destination is made using the transmission-destination information (step 65). If accessing of the transmission destination does not succeed ("NO" at step 66), then the fact that accessing of the transmission destination failed is displayed on the display screen 7 (step 70).

If accessing of the transmission destination succeeds ("YES" at step 66), the image data representing the image being displayed on the display screen 7 is read from the frame memory 29 and is transmitted from the radio antenna 4 to the transmission destination (step 68). If transmission of the image data does not succeed ("NO" at step 69), then the fact that transmission failed is displayed on the display screen 7 (step 70). If transmission of the image data succeeds ("YES" at step 69), then the fact that transmission succeeded is displayed on the display screen 7 (step 71).

Figs. 9 and 10 are flowcharts illustrating processing for setting AP information and transmission-destination information (the processing of step 58 in Fig. 6).

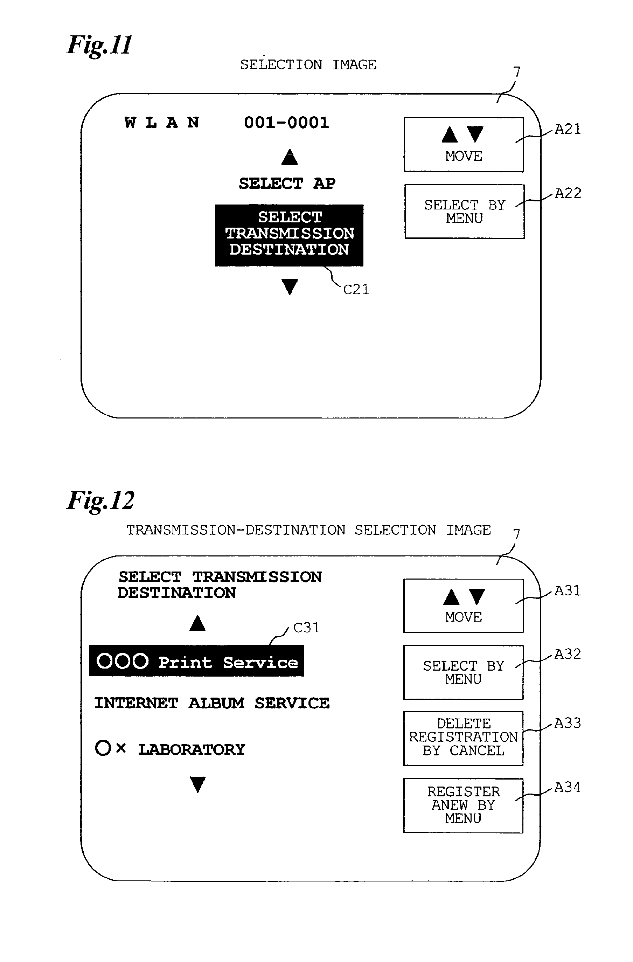

As mentioned above, a transition is made to the processing for setting AP information and transmission-destination information if the menu button 9 is pressed in the wireless-LAN mode. When this is done, an image for selecting setting of the AP information (select AP) or setting of the transmission-destination information (select transmission destination) is displayed on the display screen 7 in the manner shown in Fig. 11 (step 81).

The frame number (001-0001) of the image to be transmitted is being displayed on the selection image. The characters "SELECT AP" and the characters "SELECT TRANSMISSION DESTINATION" are being displayed at approximately the center of the selection image. Either of these items of text is enclosed by a cursor C21. Further, the selection image includes an area A21 for notifying the user of the method of moving the cursor C21, and an area A22 for notifying the user of the method of selecting the AP information or transmission-destination information.

The area A21 displays the fact that the cursor C21 will be moved upward (characters indicating the AP selection are enclosed by the cursor C21) by pressing the up arrow on the up, down, left, right button 8, and downward (characters indicating the transmission destination selection are enclosed by the cursor C21) by pressing the down arrow. The area A22 displays the fact that the processing enclosed by the cursor C21 will be selected by pressing the menu button 9.

If the menu button 9 is pressed in a case where the "SELECT AP" text has been enclosed by the cursor C21, then a transition will be made to processing for setting an access point. If the menu button 9 is pressed in a case where the "SELECT TRANSMISSION DESTINATION" text has been enclosed by the cursor C21, then a transition will be made to processing for setting a transmission destination.

With reference again to Fig. 9, it is determined whether selection of AP or selection of transmission destination has been made (steps 82, 83). First it will be assumed that selection of transmission destination has been made ("NO" at step 82, "YES" at step 83).

If selection of transmission destination is executed, a transmission-destination selection image illustrated in Fig. 12 will be displayed on the display screen 7 of the digital still camera 1 (step 84).

Transmission destinations (OOO Print Service, Internet Album Service, Ox Laboratory), which have already been stored in the non-volatile memory 35 of digital still camera 1, are being displayed at the approximate center of the image for selecting transmission destination. Any one of these transmission destinations is enclosed by a cursor C31. It may be so arranged that if a transmission destination has already been set, then the set transmission destination will be enclosed by the cursor C31 at the start.

Displayed on the right side of the transmission-destination selection image are an area A31 for notifying the user of the method of moving the cursor C31, an area A32 for notifying the user of the method of making the selection, an area A33 for notifying the user of the method of deleting what has been registered, and an area 34 for notifying the user of the method of performing registration anew.

The area A31 displays the fact that the cursor C31 will be moved upward by pressing the up arrow on the up, down, left, right button 8, and downward by pressing the down arrow. The area A32 displays the fact that the transmission destination enclosed by the cursor C31 will be selected by pressing the execute button 10. The area A33 displays the fact that registration of the transmission destination enclosed by the cursor C31 will be deleted by pressing the cancel key 11. The area A34 displays the fact that processing for newly registering the transmission destination will be started by pressing the menu button 9.

With reference again to Fig. 9, if the menu button 9 is pressed ("YES" at step 85) in a case where the transmission-destination selection image is being displayed on the display screen 7, a shoot-command image is displayed on the display screen 7 (step 94). This command instructs that the digital still camera 1 be pointed toward the two-dimensional bar code for transmission-destination information (see Fig. 4) and that this bar code be photographed. The two-dimensional bar code for transmission-destination information is then photographed by the user and processing is executed to read the transmission-destination information that has been recorded in the bar code (step 95). The details of read processing will be described later.

If reading of the bar code succeeds ("YES" at step 96), then the read transmission-destination information is analyzed (step 97). If the read transmission-destination information is in accordance with specifications and is correct ("YES" at step 98), then the read transmission-destination information is registered anew (step 99). The read transmission-destination information is thus stored in the non-volatile memory 35 (step 93). If processing for reading the bar code does not succeed ("NO" at step 96), the fact that reading of the transmission destination failed is displayed on the display screen 7 (step 100). If necessary, the processing for reading the two-dimensional bar code for transmission-destination information is executed again.

If the menu button 9 is not pressed ("NO" at step 85), processing differs depending upon the button that is pressed. If the cancel button 11 is pressed ("YES" at step 86), then the transmission destination enclosed by the cursor C31 (the transmission destination that is in focus) is deleted from the registered information (step 87). Further, the cursor C31 moves to the leading transmission destination (the destination at the top) (step 88). If the up arrow or down arrow of the up, down, left, right button 8 is pressed ("YES" at step 89), then the cursor C31 moves up or down in accordance with the arrow pressed (step 90). If the execute button 10 is pressed ("YES" at step 91), then the transmission destination enclosed by the cursor C31 is set as the transmission destination of the image data (step 92). The set transmission destination is stored in the non-volatile memory 35 (step 93).

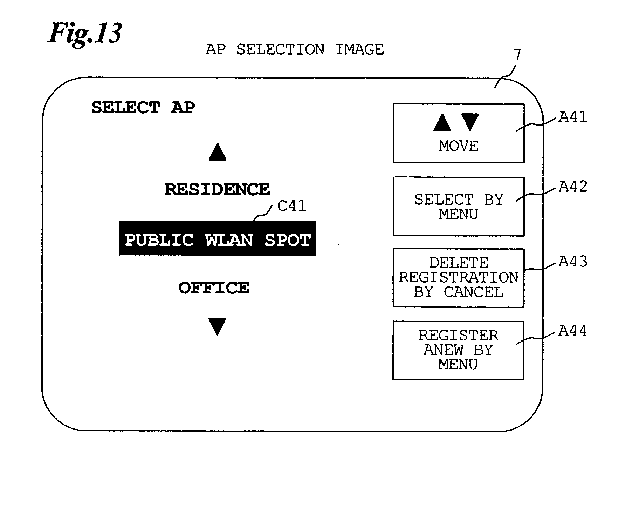

If selection of AP is made ("YES" at step 82), then the AP selection image shown in Fig. 13 is displayed on the display screen 7 of the digital still camera 1 (step 101).

In a manner similar to that of the image for selecting transmission destination, already registered access points (a residence, a public WLAN spot and an office) are being displayed at the approximate center of the AP selection image. Any one of the access points among these registered access points is enclosed by a cursor C41. It may be so arranged that an access point that has already been set is enclosed by the cursor C41.

Displayed on the right side of the transmission-destination selection image are an area A41 for notifying the user of the method of moving the cursor C41, an area A42 for notifying the user of the method of making the selection, an area A43 for notifying the user of the method of deleting what has been registered, and an area 44 for notifying the user of the method of performing registration anew.

The area A41 displays the fact that the cursor C41 will be moved upward by pressing the up arrow on the up, down, left, right button 8, and downward by pressing the down arrow. The area A42 displays the fact that the transmission destination enclosed by the cursor C41 will be selected by pressing the execute button 10. The area A43 displays the fact that registration of the transmission destination enclosed by the cursor C41 will be deleted by pressing the cancel key 11. The area A44 displays the fact that processing for newly registering the transmission destination will be started by pressing the menu button 9.

With reference again to Fig. 10, a transition is made to processing for reading the AP information if the menu button 9 is pressed ("YES" at step 102).

In a manner similar to that of processing for reading the transmission-destination information, a shoot-command image is displayed on the display screen 7 of the digital still camera 1 (step 111). This command instructs that the digital still camera 1 be pointed toward the two-dimensional bar code for AP information (see Fig. 3) and that this bar code be photographed. The two-dimensional bar code for AP information is read (step 112). If reading of the bar code succeeds ("YES" at step 113), then the read information is analyzed (step 114). If the read information is in accordance with specifications of AP information and is correct ("YES" at step 115), then the read access point is set as the access point used in transmitting image data (step 116). The set access point is stored in the non-volatile memory 35 (step 110).

If the menu button 9 is not pressed ("NO" at step 102), processing that conforms to the button pressed is executed.

If the cancel button 11 is pressed ("YES" at step 86), then the access point enclosed by the cursor C41 is deleted (step 104) and the leading access point is enclosed by the cursor C41 (step 105). If the up arrow or down arrow of the up, down, left, right button 8 is pressed ("YES" at step 106), then the cursor C41 moves up or down (step 107). If the execute button 10 is pressed ("YES" at step 108), then the access point enclosed by the cursor C41 is set as the access point (step 109). The set access point is stored in the non-volatile memory 35 (step 110).

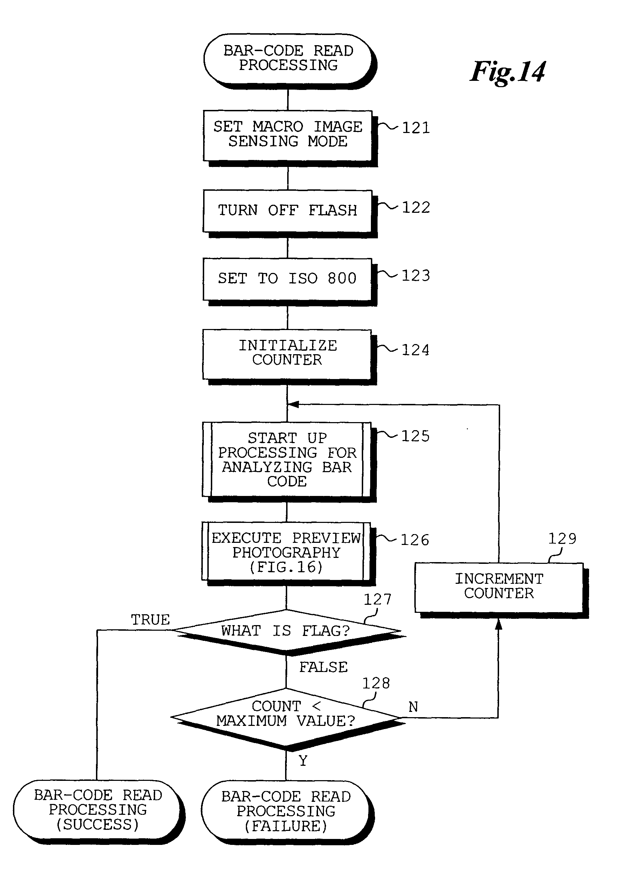

Fig. 14 is a flowchart illustrating processing for reading a bar code (the processing of step 95 in Fig. 9 or step 112 in Fig. 10).

If a transition is made to processing for reading a bar code, first the digital still camera is set to the macro image sensing mode (step 121). Further, if an electronic flash mode has been set, the light emission is turned off (step 122). Furthermore, a gain control signal applied to the gain control amplifying circuit 17 included in the signal processing block 20 is controlled so as to obtain an ISO sensitivity that is equivalent to 800 (step 123). A counter for limiting the number of times bar-code read processing is executed is initialized (step 124).

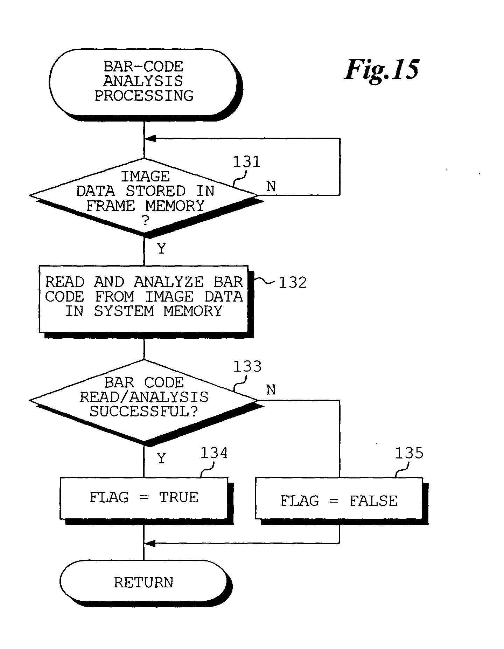

Next, processing for analyzing the bar code is started up (step 125). Processing for analyzing the bar code will be described later (see Fig. 15). The bar code is photographed in the preview mode with the processing for analyzing the bar code having been started (step 126). Processing in the preview mode also will be described later.

A flag indicating whether analysis of the photographed bar code has succeeded is set in the preview mode. If the flag has been set to TRUE (step 127), it is construed that bar-code read processing has succeeded and processing is then exited. If the flag has been set to FALSE (step 127), then whether the count is the maximum value is checked (step 128). If the count has not attained the maximum value, then the counter is incremented (step 129) and processing from step 125 onward is repeated.

Fig. 15 is a flowchart illustrating processing for analyzing a bar code.

If bar-code photography in the preview mode is carried out, as will be described later, image data representing the bar code is stored temporarily in the frame memory 29. Accordingly, the bar code is photographed in the preview mode and whether bar-code image data that has not been compressed has been stored in the frame memory 29 is checked (step 131). If bar-code image data has been stored temporarily in the frame memory 29 ("YES" at step 131), then the bar-code image data is read and the content of the bar code is analyzed (step 132). This analysis can be performed utilizing a CRC (Cyclic Redundancy Check), check sum or Reed-Solomon code, etc.

If the reading and analysis of the bar-code image data have succeeded ("YES" at step 133), then a flag is set to TRUE (step 134). In the event of failure ("NO" at step 133), the flag is set to FALSE (step 135). The content of the flag thus set is utilized in bar-code read processing in the manner described above.

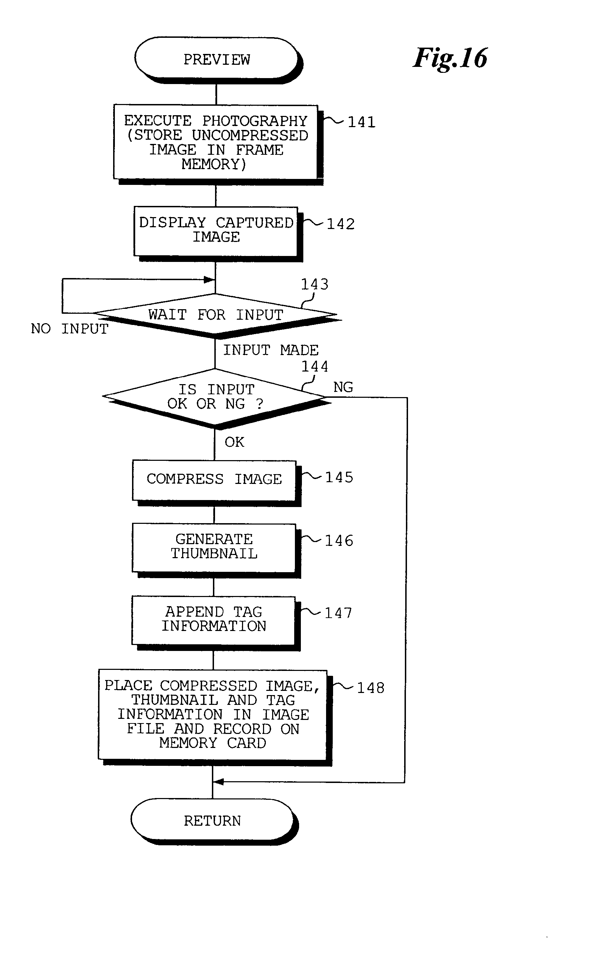

Fig. 16 is a flowchart illustrating processing in the preview mode (the processing of step 126 in Fig. 14).

The bar code is photographed, bar-code image data representing the bar-code image is applied to the frame memory 29 in the uncompressed state and here the data is stored temporarily (step 141). The bar-code image data is applied to the frame memory 29 and the bar-code image is displayed on the display screen 7 (step 142). The camera stands by until a command of some kind is applied (step 143).

If the reading and analysis of the bar-code image data succeed in the bar-code analysis processing (Fig. 15) in the manner described above, an NG command (a command to the effect that image data that has been stored temporarily in the system memory 34 not be recorded on the memory card 42) is generated (step 143; NG at step 144). Thus, the generation of the NG command in a case where a bar code has been photographed prevents the bar-code image data from being recorded on the memory card 42. It goes without saying, however, that it may be so arranged that bar-code image data is recorded on the memory card 42.

In the ordinary preview mode, the image of the subject is displayed on the display screen 7 (step 142) and is checked by the user. In a case where the image data representing the image of the subject is recorded on the memory card 42, the execute button 10 is pressed by the user. If the image data representing the image of the subject is not to be recorded on the memory card 42, the cancel key 11 is pressed by user. An OK command is generated by pressing the execute button 10, and an NG command is generated by pressing the cancel key 11.

In response to generation of the OK command, the image data that has been stored temporarily in the system memory 34 is read and is then compressed by the compression/expansion circuit 25 (step 145). Further, thumbnail image data is generated from the image data (step 146). Furthermore, prescribed tag information is generated (step 147). An image file is generated from the compressed image data, the thumbnail image data and the tag information and the file is recorded on the memory card 42 (step 148).

As many apparently widely different embodiments of the present invention can be made without departing from the spirit and scope thereof, it is to be understood that the invention is not limited to the specific embodiments thereof except as defined in the appended claims.

## Claims

1. A digital still camera having an image sensing device for sensing the image of a subject and outputting image data representing the image of the subject, and a recording controller for recording image data, which has been output from the image sensing device, on a recording medium, said digital still camera comprising:
a bar-code-image sensing mode setting device for setting a mode for sensing the image of a bar code in which has been recorded setting information to be used in a transmission utilizing a wireless LAN;
an image sensing controller for controlling the image sensing device, in response to setting of the bar-code-image sensing mode by said bar-code-image sensing mode setting device, so as to sense the image of the bar code by a macro image sensing mode and output bar-code image data representing the image of the bar code;
a wireless-LAN setting information detecting device for detecting the wireless-LAN setting information from the bar-code image data, which has been output from the image sensing device, based upon control by said image sensing controller; and
a wireless-LAN transmitting device for wirelessly transmitting image data, which has been recorded on the recording medium, using the wireless-LAN setting information that has been detected by said wireless-LAN setting information detecting device.

2. The camera according to claim 1, further comprising:
a preview mode setting device for setting a preview mode;
a camera internal memory for temporarily storing image data, which has been output from the image sensing device, in response to setting of the preview mode by said preview mode setting device; and
a recording command device for inputting a recording command;
wherein said recording controller records image data, which has been stored temporarily in said camera internal memory, on the recording medium in response to input of a recording command from said recording command device; and
said wireless-LAN setting information detecting device detects the wireless-LAN setting information from the bar-code image data that has been stored temporarily in said camera internal memory.

3. The digital still camera according to claim 2, further comprising a controller for controlling said image sensing controller and said wireless-LAN information detecting device so as to repeat the sensing of bar code and the detection of the wireless-LAN setting information in response to failure of detection of the wireless-LAN information by said wireless-LAN information detecting device.

4. A digital still camera having an image sensing device for sensing the image of a subject and outputting image data representing the image of the subject, and a recording controller for recording image data, which has been output from the image sensing device, on a recording medium, said digital still camera comprising:
a bar-code-image sensing mode setting device for setting a mode for sensing the image of a bar code in which has been recorded image-data transmission destination information;
an image sensing controller for controlling the image sensing device, in response to setting of the bar-code-image sensing mode by said bar-code-image sensing mode setting device, so as to sense the image of the bar code by a macro image sensing mode and output bar-code image data representing the image of the bar code;
a transmission-destination information detecting device for detecting the transmission-destination information from the bar-code image data, which has been output from the image sensing device, based upon control by said image sensing controller; and
a wireless LAN device for wirelessly transmitting image data, which has been recorded on the recording medium, to the transmission destination specified by the transmission-destination information detected by said transmission-destination information detecting device.

5. The digital still camera according to claim 4, further comprising:
a preview mode setting device for setting a preview mode;
a camera internal memory for temporarily storing image data, which has been output from the image sensing device, in response to setting of the preview mode by said preview mode setting device; and
a recording command device for inputting a recording command;
wherein said recording controller records image data, which has been stored temporarily in said camera internal memory, on the recording medium in response to input of a recording command from said recording command device; and
said transmission-destination information detecting device detects the transmission-destination information from the bar-code image data that has been stored temporarily in said camera internal memory.

6. The digital still camera according to claim 5, further comprising a controller for controlling said image sensing controller and said transmission-destination information detecting device so as to repeat the sensing of bar code and the detection of the transmission-destination information in response to failure of detection of the transmission-destination information by said transmission-destination information detecting device.

7. The digital still camera according to claim 1,
wherein the image sensing device includes a solid-state image sensing element for sensing the image of a subject and outputting an analog video signal representing the image of the subject, a gain-control amplifying circuit for adjusting level of the analog video signal that has been output from the solid-state image sensing element, and an analog/digital converting circuit for converting the analog video signal, which has been output from the gain-control amplifying circuit, to image data, said digital still camera further comprising:
an electronic flash device; and
a controller for exercising control so as to turn off a light emission in the electronic flash device and raise gain in said gain-control amplifying circuit in response to setting of the bar-code-image sensing mode by said bar-code-image sensing mode setting device.

8. The digital still camera according to claim 4,
wherein the image sensing device includes a solid-state image sensing element for sensing the image of a subject and outputting an analog video signal representing the image of the subject, a gain-control amplifying circuit for adjusting level of the analog video signal that has been output from the solid-state image sensing element, and an analog/digital converting circuit for converting the analog video signal, which has been output from the gain-control amplifying circuit, to image data, said digital still camera further comprising:
an electronic flash device; and
a controller for exercising control so as to turn off a light emission in the electronic flash device and raise gain in said gain-control amplifying circuit in response to setting of the bar-code-image sensing mode by said bar-code-image sensing mode setting device.

9. A digital still camera for sensing the image of a subject using an image sensing device and recording image data, which represents the image of the subject, on a recording medium, comprising:
a setting device for setting a wireless-LAN transmission mode;
a wireless LAN device for wirelessly transmitting image data, which has been recorded on the recording medium, based upon set wireless-LAN information in response to setting of the wireless-LAN transmission mode by said wireless-LAN transmission mode setting device;
a bar-code-image sensing mode setting device for setting a mode for sensing the image of a bar code, in which wireless-LAN setting information has been recorded, in accordance with setting of the wireless-LAN transmission mode by said wireless-LAN transmission mode setting device;
an image sensing controller for controlling the image sensing device in response to setting of the bar-code-image sensing mode by said bar-code-image sensing mode setting device so as to sense the image of the bar code and output bar-code image data representing the image of the bar code;
a wireless-LAN transmission information detecting device for detecting the wireless-LAN transmission information from the bar-code image data, which has been output from the image sensing device, based upon control by said image sensing controller; and
a wireless-LAN device setting device for setting the wireless-LAN transmission information, which has been detected by said wireless-LAN transmission information detecting device, in the wireless-LAN device.

10. A method of controlling a digital still camera having an image sensing device for sensing the image of a subject and outputting image data representing the image of the subject, and a recording controller for recording image data, which has been output from the image sensing device, on a recording medium, said method comprising the steps of:
controlling the image sensing device, in response to setting of a mode for sensing the image of a bar code in which has been recorded setting information to be used in a transmission utilizing a wireless LAN, so as to sense the image of the bar code by a macro image sensing mode and output bar-code image data representing the image of the bar code;
detecting the wireless-LAN setting information from the bar-code image data, which has been output from the image sensing device; and
wirelessly transmitting image data, which has been recorded on the recording medium, by a wireless LAN using the detected wireless-LAN setting information.

11. A method of controlling a digital still camera having an image sensing device for sensing the image of a subject and outputting image data representing the image of the subject, and a recording controller for recording image data, which has been output from the image sensing device, on a recording medium, said method comprising the steps of:
controlling the image sensing device, in response to setting of a mode for sensing the image of a bar code in which has been recorded image-data transmission destination information, so as to sense the image of the bar code by a macro image sensing mode and output bar-code image data representing the image of the bar code;
detecting the transmission-destination information from the bar-code image data that has been output from the image sensing device; and
wirelessly transmitting image data, which has been recorded on the recording medium, to the transmission destination specified by the transmission-destination information detected.

12. A method of controlling a digital still camera for sensing the image of a subject using an image sensing device and recording image data, which represents the image of the subject, on a recording medium, said method comprising the steps of:
wirelessly transmitting image data, which has been recorded on the recording medium, based upon set wireless-LAN information in response to setting of a wireless-LAN transmission mode;
setting a mode for sensing the image of a bar code, in which wireless-LAN setting information has been recorded, in response to setting of the wireless-LAN transmission mode;
controlling the image sensing device, in response to setting of the bar-code-image sensing mode, so as to sense the image of the bar code and output bar-code image data representing the image of the bar code;
detecting the wireless-LAN transmission information from the bar-code image data that has been output from the image sensing device; and
setting the detected wireless-LAN transmission information in the wireless-LAN device.
